# EUROPEAN PATENT APPLICATION

(11) **EP 1 923 757 A2**
(43) Date of publication of application: **21.05.2008**
(21) Application number: 07022200.5
(22) Date of filing: 15.11.2007
(51) Int. Cl.: G05B 19/406

(54) **Device for displaying a moving locus in a tandem structure**

(30) Priority: 17.11.2006 JP 2006311359
(71) Applicant: FANUC LTD, Minamitsuru-gun, Yamanashi 401-0597 (JP)
(72) Inventor: Iwashita, Yasusuke, Minamitsuru-gun Yamanashi, 401-0597 (JP); Okita, Tadashi, Minamitsuru-gun Yamanashi, 401-0597 (JP); Kawamura, Hiroyuki, Minamitsuru-gun Yamanashi, 401-0597 (JP); Sugiyama, Kazuyuki, Minamitsuru-gun Yamanashi, 401-0597 (JP)
(74) Representative: Thum, Bernhard

(57) **Abstract**

A device for displaying a moving locus in which a moving body is supported at its both ends by a pair of feed axes of a tandem structure so as to move in a opposite direction of the pair of feed axes, and has a point where a position is to be controlled at an internally dividing point to divide a distance between the pair of feed axes into a predetermined ratio, and the moving locus of the point where the position is to be controlled is drawn, the device having a data storage portion for storing a first position data and second position data of the moving body detected on the pair of feed axes when the pair of feed axes are driven maintaining synchronization; a data calculating portion for calculating a third position data of the point where the position is to be controlled from the first position data and second position data on the pair of feed axes stored in the data storage portion; and a locus display portion for drawing the moving locus of a point where the position is to be controlled based on the third position data calculated by the data calculating portion.

## Description

### BACKGROUND OF THE INVENTION

### 1. Field of the Invention

The present invention relates to a device for displaying a moving locus which can be applied to industrial machines such as a machine tool, an electrically powered press machine, an injection-molding machine and a punch press driven by a servo motor, and displays a moving locus of a point where the position is to be controlled by a moving body arranged on a pair of feed axes of a tandem structure.

### 2. Description of the Related Art

A device for displaying a moving locus of a point where the position of a moving body such as a work table or a tool post arranged on the feed axes is to be controlled, and a method of displaying a moving locus as disclosed in JP-A-2005-189215 have been widely known. According to the method of this publication, a predetermined data sequence is calculated as time series data related to the time relying on the operation of data obtained through a plurality of channels, and a moving locus of a point where the position is to be controlled is displayed based on the data sequence. According to this device and method, time data is denoted by T(n), the data of a first channel is regarded as position data X(n) in the X-axis direction, the data of a second channel data is regarded as position data Y(n) in the Y-axis direction, and a moving locus of a point where the position is to be controlled is displayed relying on the two-dimensional data synthesized by X and Y.

Another prior art has been disclosed in JP-A-5-1007365 in which a locus of a tool instructed by multi-axis control command NC data is similar to the locus in actual operation. Further, JP-A-8-16246 discloses a tandem control method for improving the stability of operation of a tandem structure by driving a pair of feed axes using a main motor and sub-motor.

A tandem control is often carried out to drive a pair of parallel feed axes by using two servo motors when a moving body such as a work table or a tool post movably supported by the feed axis is too large and cannot be accelerated or decelerated maintaining a good response or when the precision positioning is poor between the servo motor and the moving body. The tandem control is a control which uses a pair of feed axis connected to the two motors, i.e., a main motor and sub-motor, and moves the moving body that is movably supported by the pair of feed axes. In the tandem control, the main motor and.sub-motor are controlled to synchronize with each other. However, by a small difference in the position of the feed axis on the master side and the position of the feed axis on the slave side, there is a problem that an synchronous error between the pair of feed axes may result. In such a case, a point where the position is to be controlled of the moving body that is present between the pair of feed axes rests neither on the position of the feed axis on the master side nor on the position of the feed axis on the slave side, and it is difficult to correctly find the point where the position is to be controlled.

The method disclosed in patent document 1 operates a predetermined data sequence based on the data obtained through a plurality of channels, but does not handle data that cannot be obtained through a predetermined channel like the above point where the position is to be controlled. Therefore, the moving locus of the point where the position is to be controlled of the moving body present between the pair of feed axes cannot be correctly displayed. For example, when the moving body is a tool post capable of moving in the two-dimensional directions and a cutting edge of a cutting tool fixed to the tool post is a point where the position is to be controlled, the profile of the workpiece cut by the cutting edge of the tool is different from the moving locus of the tool displayed on a display of the machine tool, there is a problem that the size and shape of the worked product cannot be correctly evaluated.

### SUMMARY OF THE INVENTION

In view of the above-mentioned points, it is an object of the present invention to provide a device capable of more correctly displaying the moving locus of a point where the position is to be controlled on the side of a pair of feed axes of a tandem structure.

In order to achieve the above object, the present invention provides a device for displaying a moving locus in which a moving body is supported at its both ends by a pair of feed axes of a tandem structure so as to move in a direction of the feed axes, and has a point where a position is to be controlled at a point where a distance between the pair of feed axes is internally divided into a predetermined ratio, and the moving locus of the point where the position is to be controlled is drawn, the device for displaying a moving locus comprising: a data storage portion for storing a position data of the moving body detected on the feed axes when the pair of feed axes are driven maintaining synchronization; a data calculating portion for calculating the position data of the point where the position is to be controlled from the position data on the feed axes stored in the data storage portion; and a locus display portion for drawing a moving locus of the point where the position is to be controlled based on the position data calculated by the data calculating portion.

In the device for displaying a moving locus of the invention, the point where the position is to be controlled is presumed to be positioned at a point K of internally dividing the distance between the pair of feed axes, the position data of the moving body on a first feed axis is denoted by Xm, the position data of the moving body on a second feed axes is denoted by Xs, and the position data of the point where the position is to be controlled is calculated from a formula (1 - k) x Xm + k x Xs.

In the device for displaying a moving locus of the invention, the pair of feed axes includes a first feed axis on a master side and a second feed axis on a slave side, a point where the position is to be controlled is allowed to move in a direction of a third feed axis at right angles with the first feed axis and the second feed axis, and the moving locus is drawn as a curve.

According to the present invention, the actual position data of the moving body on the feed axes is stored in the data storage portion, the data operation portion operates the position data of the point where the position is to be controlled of the moving body positioned on the pair of feed axes, and the moving locus of the point where the position is to be controlled is drawn on the locus display portion. Therefore, the moving locus of the point where the position is to be controlled can be correctly displayed even if there is an error in the synchronization between the pair of feed axes of the tandem structure. Accordingly, the size and shape of the worked product can be correctly evaluated to enhance the working precision.

If the internally dividing point to divide the distance between the axes is K, the position of the point that is to be controlled can be found through a simple proportional calculation.

If the point where the position is to be controlled is permitted to move in the direction of the third feed axis at right angles with the first feed axis and the second feed axis, then the moving locus of the point where the position is to be controlled can be drawn as a curve on a plane which includes axes meeting at right angles with each other. The moving locus with a shape such as a circular shape, elliptic shape and wave shape can be correctly displayed. Therefore, the range of application for displaying a moving locus can be expanded.

### BRIEF DESCRIPTION OF THE DRAWINGS

The above and other objects as well as features and advantages of the invention will become more obvious from the following description of the preferred embodiments in connection with the accompanying drawings in which:
Fig. 1 is a block diagram illustrating the constitution of a first embodiment of a device for displaying a moving locus according to the invention;
Fig. 2 is a block diagram of major portions illustrating a method of controlling a pair of feed axes of a tandem structure and controlling a servo motor that drives the pair of feed axes;
Fig. 3 is a diagram of moving loci of a point where the position is to be controlled drawn by the device for displaying a moving locus of Fig. 1;
Fig. 4 is a block diagram of the constitution of a second embodiment of the device for displaying a moving locus according to the invention; and
Fig. 5 is a block diagram of the constitution of a third embodiment of the device for displaying a moving locus according to the present invention.

### DETAILED DESCRIPTION

The concrete embodiments of the invention will now be described in detail below with reference to the drawings.

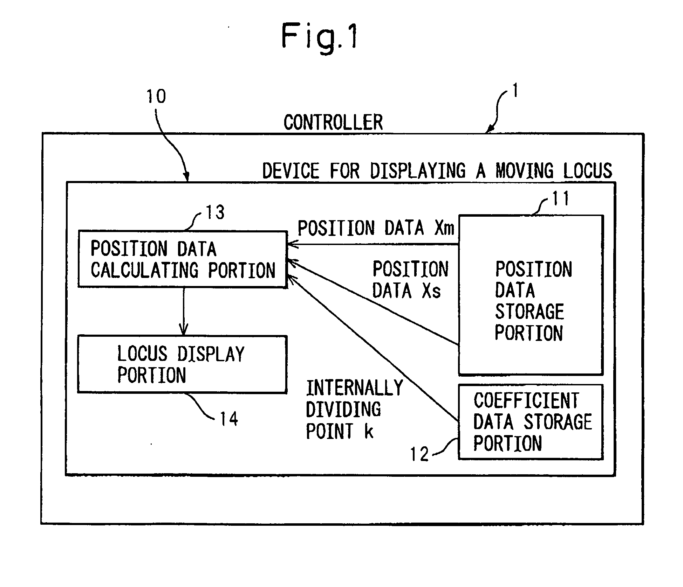

Fig. 1 illustrates the constitution of a first embodiment of a'device for displaying a moving locus according to the invention. A device 10 for displaying a moving locus of this embodiment is provided in a controller 1 of a multi-axis machine tool, and includes a position data storage portion 11, a coefficient data storage portion 12, a position data calculating portion 13 and a locus display portion 14. Device 10 for displaying a moving locus will be described later in detail.

The machine tool that is not shown includes a main axis (S-axis) provided in a ram that can move up and down (Z-direction) along a feed axis, and a work table (moving body) 5 which supports a workpiece (moving body) 6 to be cut by a cutting tool attached to the main axis, work table 5 being capable of moving in a biaxial direction (X-Y direction) at right angles on a horizontal plane. Two feed axes for moving work table 5 are constituted as a pair of first feed axis 15 and second feed axis 16 in parallel with each other in a tandem structure. Two servo motors for driving first feed axis 15 and second feed axis 16 include a servo motor 18 on a master side and a servo motor 19 on a slave side, which are controlled by controller 1 in synchronization.

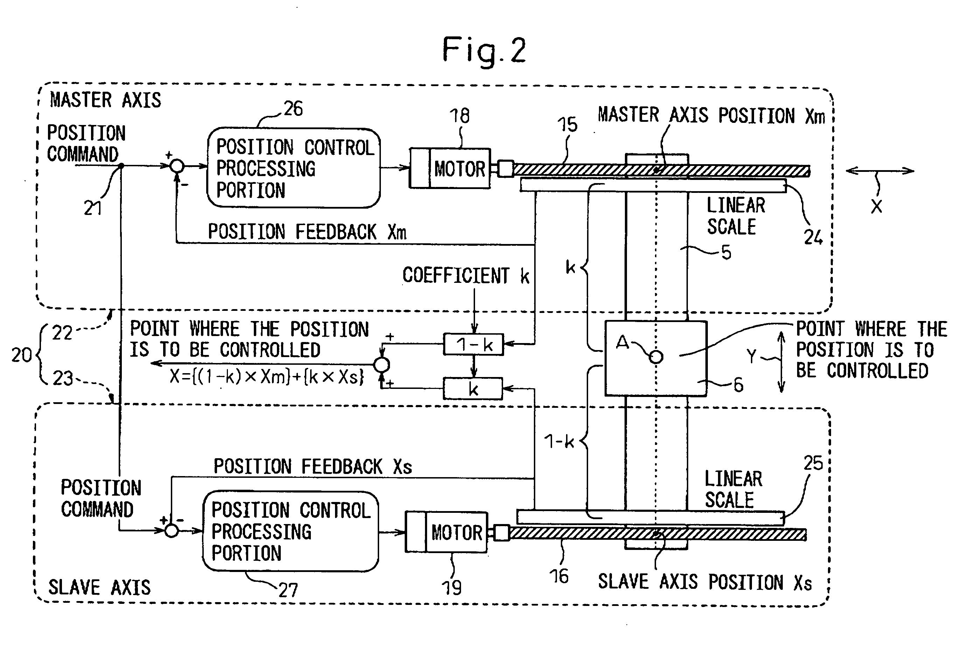

Controller 1 is connected to a numerical control device which is a host control device via a shared memory (not shown). Control commands for the servo motors that drive the feed axes are output from the numerical control device. Controller 1 has a digital servo circuit 20 (Fig. 2) constituted by a processor, a ROM and a RAM. Digital servo circuit 20 controls, by a position loop and a speed loop, servo motors 18, 19 for driving the pair of feed axes (X-axes) 15, 16 of a tandem structure, a servo motor for driving a feed axis (Y-axis) at right angles with feed axes 15, 16, and a spindle motor for driving the main axis relying upon feedback signals and, further, controls them by a current loop based on current feedback signals from an amplifier such as a transistor inverter.

Fig. 2 shows a flow of control for servo motor 18 on the master side and for servo motor 19 on the slave side, that drive first feed axis 15 and second feed axis 16. First, a motion (position) command per a unit time output from the host numerical control device is branched into two directions at a branch point 21, one motion command serving as a motion command for servo motor 18 on the master side and the other motion command being multiplied by a conversion coefficient K of a predetermined ratio to serve as a position command for servo motor 19 on the slave side.

Feed axis circuit 22 on the master side finds a position deviation (position loop control) by subtracting a detected value of position feed back output from a linear scale 24 which is a position detector for first feed axis 15 on the master side, and finds, through a position control processing portion 26, a speed command by multiplying the position deviation by a position loop gain. Next, a speed deviation is found (speed loop control) by subtracting, from the above speed command, a detected value of speed feedback output from a speed detector that detects the speed of servo motor 18. A proportional integration control (PI control) is executed for the speed deviation to find an electric current command (torque command). Thereafter, an electric current deviation is found (current loop control) by subtracting a detected value of current feedback from the current command, and servo motor 18 on the master side is driven via an amplifier.

Feed axis circuit 23 on the slave side also successively executes the position loop control, speed loop control and current loop control, and drives servo motor 19 on the slave side via an amplifier in the same manner as that of feed axis circuit 22 on the master side.

The above synchronous control based on digital servo circuit 20 is basically the same as that of the prior art. When the inertia is large due to the feed axes having high rigidity or when the feed axes are driven at high speeds; however, the position deviation becomes too great if the apparatus is controlled by digital servo circuit 20 only. In such a case, the above synchronous control based on digital servo circuit 20 may be provided with means for correcting the error in the synchronization between pair of feed axes 15 and 16 in the tandem structure. One of the features of the present invention is that the position of a point A which is to be controlled being located between pair of feed axes 15 and 16 can be correctly calculated without the need of providing means for correcting error in the synchronization. When means is provided for correcting the error in the synchronization, however, the point A where the position is to be controlled can be found more correctly.

Referring to Fig. 1, the position data storage portion (data storage portion 11) in device 10 for displaying a moving locus of this embodiment works as means for storing position data Xm and Xs of work table 5 detected on feed axes 15 and 16 by linear scales 24 and 25 when first feed axis 15 and second feed axis 16 are driven. Position data Xm and Xm are output to position data storage portion 11 through the channels of linear scales 24 and 25. This embodiment uses linear scales 24 and 25 as position detectors. However, it is also allowable to use rotary encoders for detecting the rotational angles of the servo motors as position detectors.

Coefficient data storage portion 12 in device 10 for displaying a moving locus works as means for storing, as coefficient data, an internally dividing point K where a point A of which the position is to be controlled of workpiece 6 divides the distance between pair of feed axes (X-axes) 15 and 16 into a predetermined ratio. Internally dividing point K corresponds to a working point on workpiece 6 that is to be cut by the cutting tool held by the main axis of the machine tool, and can assume any value in a range of 0 to 1. When workpiece 6 is three-dimensionally worked by the cutting tool, internally dividing point K can be expressed as a function of a position in the direction of Y-axis at right angles with pair of feed axis 15 and 16.

Position data calculating portion (data operation portion) 13 in device 10 for displaying a moving locus works as means for calculating the position data of point A where position is to be controlled of workpiece 6 (Fig. 2) from position data Xm and Xs on feed axes 15 and 16 stored in position data storage portion 11 and from the internally dividing position K stored in the coefficient data storage portion 12. When point A where the position is to be controlled, i.e., the internally dividing point, is denoted by K, the position data of work table 5 on first feed axis 15 by Xm and the position data of work table 5 on second feed axis 16 by Xs, position data Xk of point A where position is to be controlled of workpiece 6 located between first feed axis 12 and second feed axis 16, can be calculated from formula (1 - k) x Xm + k x Xs (see Fig. 2). For example, when K is 0, position data Xk of point A where the position is to be controlled becomes equal to Xm. When K is 1, position data Xk at point A where the position is to be controlled becomes equal to Xs and when K is 0.5, position data Xk of point A where the position is to be controlled is calculated as an arithmetic mean of Xm and Xs.

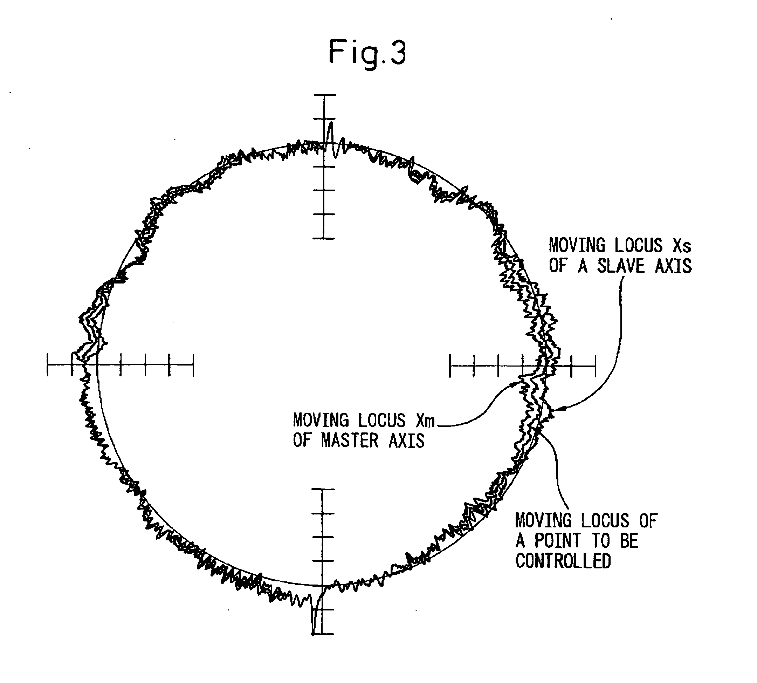

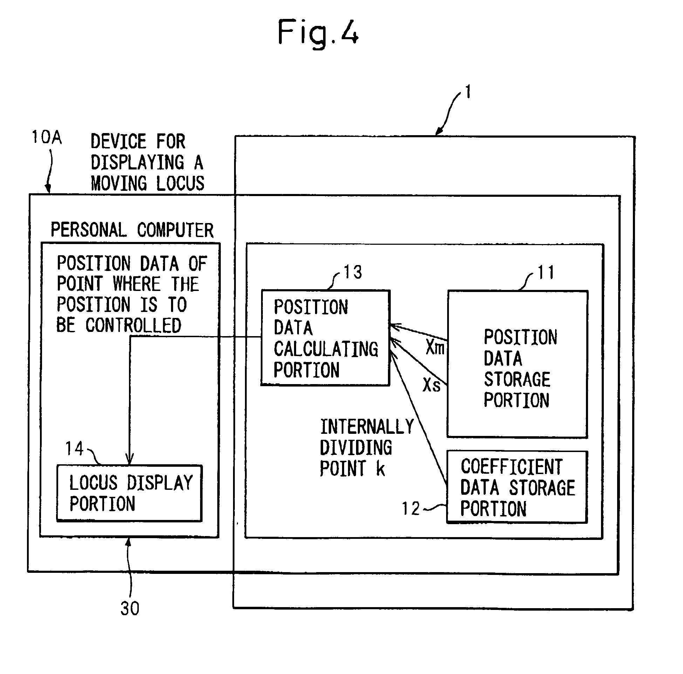

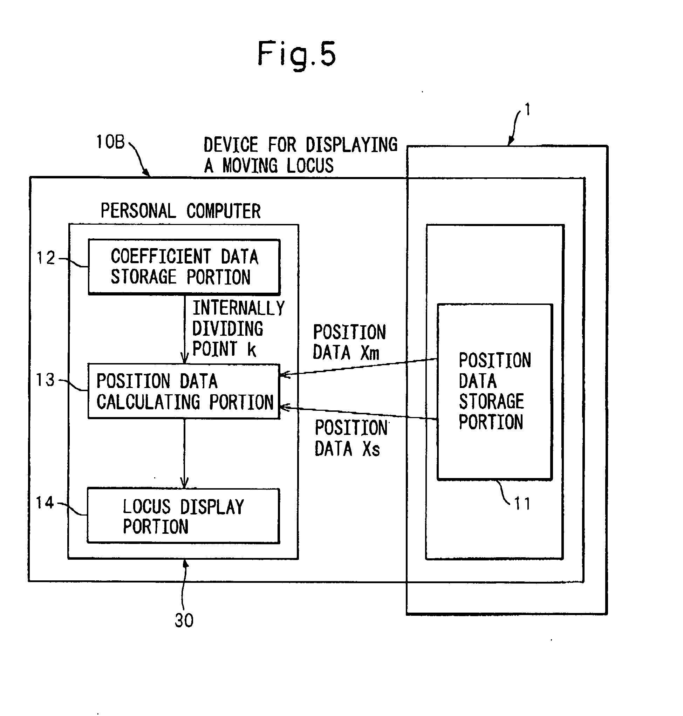

Locus display portion 14 in device 10 for displaying a moving locus is a CRT or a liquid crystal display for drawing the moving locus of point A where the position is to be controlled based on the position data calculated by position data calculating portion 13. This embodiment uses a CRT or a liquid crystal display provided in controller 1. The moving locus varies depending upon internally dividing point K. If internally dividing point K is constant like in the case of the two-dimensional cutting, the moving locus is drawn as a straight line. If internally dividing point K varies like in the case of the three-dimensional cutting, the moving locus is drawn as a curve like a circle, an ellipse or a wave. Fig. 3 is drawing circular moving loci, wherein a moving locus of point A where the position is to be controlled is drawn between a moving locus of the first feed axis and a moving locus of the second feed axis. The moving locus displayed on locus display portion 14 corresponds to a working profile of workpiece 6. Therefore, the result of work, size and shape of the worked product can be evaluated based on the moving locus. Next, described below with reference to Figs. 4 and 5 are modified examples of the device for displaying a moving locus according to the present invention. In a device 10A for displaying a moving locus shown in Fig. 4, an image display portion of a personal computer 30 substitutes for locus display portion 14 which is not included in controller 1. In this modified example, the moving locus can be displayed on the external display device connected to controller 1 that controls the drive sources, making it possible to reduce the burden on the controller 1 which is used for the image processing and to avoid the collision of data processed in controller 1. In a device for displaying a moving locus shown in Fig. 5, a corresponding portion of a personal computer 30 substitutes for coefficient data storage portion 12, position data calculating portion 13 and locus display portion 14 which are not included in the controller 1. According to this modified example, a further decreased load is exerted on controller 1 that controls the drive sources.

The present invention is not limited to the above embodiments only but can be put into practice being modified in a variety of other ways. The above embodiments display a moving locus of a point where the position is to be controlled of a workpiece integrally supported by a work table. When a pair of feed axes of the tandem structure are provided on the side of the tool post to which the cutting tool is fixed, the moving locus can be displayed with the position of the cutting blade of the cutting tool as a point where the position is to be controlled. Further, even when the tandem structure having the pair of feed axes is provided on a moving portion of an electrically powered press machine or an injection-molding machine, the moving locus of the point where the position is to be controlled can be displayed as in the embodiments of the invention.

## Claims

1. A device (10) for displaying a moving locus in which a moving body (6) is supported at its both ends by a pair of feed axes (15, 16) of a tandem structure so as to move in an opposite direction of said pair of feed axes, and has a point (A) where a position is to be controlled at an internally dividing point to divide a distance between said pair of feed axes (15, 16) into a predetermined ratio, and said moving locus of said point
(A) where the position is to be controlled is drawn, the device comprising:
a data storage portion (11) for storing a first position data and second position data of said moving body (6) detected on said pair of feed axes (15, 16) when said pair of feed axes (15, 16) are driven maintaining synchronization;
a data calculating portion (13) for calculating a third position data of said point (A) where the position is to be controlled from said first position data and second position data on said pair of feed axes (15, 16) stored in said data storage portion (11); and
a locus display portion (14) for drawing said moving locus of said point (A) where the position is to be controlled based on said third position data calculated by said data calculating portion (13).

2. The device (10) for displaying a moving locus according to claim 1, wherein:
said point (A) where the position is to be controlled is presumed to be positioned at said' internally dividing point K to divide the distance between said pair of feed axes;
said first position data of said moving body (6) on a first feed axis (15) is denoted by Xm;
said second position data of said moving body (6) on a second feed axis (16) is denoted by Xs; and
said third position data of said point (A) where the position is to be controlled is calculated from a formula (1 - k) x Xm + k x Xs.

3. The device (10) for displaying a moving locus according to claim 1 or 2,
wherein said pair of feed axes (15, 16) includes a first feed axis (15) on a master side and a second feed axis (16) on a slave side, said point (A) where the position is to be controlled is allowed to move in a direction of a third feed axis at right angles with said first feed axis (15) and said second feed axis (16), and said moving locus is drawn as a curve.

4. The device (10) for displaying a moving locus according to claim 1 or 2,
wherein said locus display portion (14) is a display portion of a controller (1) that controls drive sources (18, 19) for said pair of feed axes (15, 16).

5. The device (10) for displaying a moving locus according to claim 1 or 2,
wherein said locus display portion (14) is an external display portion connected to a controller (1) that controls drive sources (18, 19) for said pair of feed axes (15, 16).

6. The device (10) for displaying a moving locus according to claim 1 or 2,
wherein a personal computer (30) connected to a controller (1) that controls drive sources (18, 19) for said pair of feed axes (15, 16) works as said data calculating portion (13), and a display portion connected to said personal computer (30) works as said locus display portion (14).
